**Europäisches Patentamt**

**European Patent Office**

**Office européen des brevets**

(19)

(11) Numéro de publication : **0 338 885 B1**

(12)

# FASCICULE DE BREVET EUROPEEN

(45) Date de publication du fascicule du brevet :
**17.07.91 Bulletin 91/29**

(51) Int. Cl.$^5$ : **F16D 65/12**

(21) Numéro de dépôt : **89400937.2**

(22) Date de dépôt : **05.04.89**

(54) **Disque de rotor de frein en carbone équipé de cavaliers de renforcement.**

(30) Priorité : **08.04.88 FR 8804689**

(43) Date de publication de la demande :
**25.10.89 Bulletin 89/43**

(45) Mention de la délivrance du brevet :
**17.07.91 Bulletin 91/29**

(84) Etats contractants désignés :
**DE GB IT**

(56) Documents cités :
**FR-A- 2 040 586**
**FR-A- 2 257 820**
**FR-A- 2 266 054**

(56) Documents cités :
**FR-A- 2 277 273**
**FR-A- 2 611 010**
**US-A- 3 891 066**
**US-A- 4 083 434**

(73) Titulaire : **MESSIER BUGATTI**
**Zone aéronautique Louis Bréquet B.P. 40**
**F-78140 Velizy Villacoublay (FR)**

(72) Inventeur : **Guichard, Jean**
**15 rue Louis Blanc**
**F-92250 La Garenne Colombes (FR)**

(74) Mandataire : **Robert, Jean-Pierre et al**
**CABINET BOETTCHER 23, rue la Boétie**
**F-75008 Paris (FR)**

EP 0 338 885 B1

Jouve, 18, rue Saint-Denis, 75001 PARIS

## Description

L'invention concerne un disque de rotor de frein en carbone selon le préambule de la revendication 1.

Un disque de telle sorte est connu par exemple du FR-A-2266054.

Chacun des disques de rotor de frein en carbone comporte des crans d'entraînement dans lesquels viennent s'appuyer des clavettes d'entraînement liées à la roue. Les crans sont de forme trapézoïdale de sorte que l'appui des clavettes sur les flancs d'entraînement de ces crans soit dirigé vers la partie intérieure du disque pour résister efficacement aux efforts de cisaillement.

Il est habituel de garnir les parties du disque séparant les crans de cavaliers métalliques de renforcement pour reprendre les efforts de réaction des clavettes et les répartir dans la crête du disque situé entre chaque cran. Ces cavaliers coiffent cette crête et sont rivetés au travers de son épaisseur.

Un premier type de cavalier consiste en une pièce métallique pliée en U dont le fond est cintré pour recouvrir la totalité de la crête du disque entre deux crans. Les extrémités de ce cavalier sont usinées pour s'étendre dans le même plan que les faces d'entraînement limitant la crête. Cependant, au montage, il est pratiquement impossible de faire coïncider chacune des extrémités avec le plan de la face correspondante. En effet, la position du cavalier sur le disque est déterminée par les rivets qui passent au travers d'orifices dans les ailes du U et dans la crête du disque, ménagés à l'avance dans les pièces et dont la position ne peut être déterminée qu'en référence à ces faces ou extrémités en pente. Or, cette détermination est entachée d'une erreur aléatoire du fait de la nature en pente des faces de référence et de l'imprécision de mesure et de contrôle qui en résultent.

Cette absence de coïncidence conduit à prévoir des cavaliers de sorte qu'ils présentent dans tous les cas des chants d'extrémité dépassant les flancs du cran pour que la clavette porte sur ces chants. Il faut également souligner que l'appui est toujours accompagné d'un glissement de la clavette par rapport au disque dans le plan de surface d'entraînement, glissement ayant pour cause des déformations élastiques qui se traduisent par une ovalisation de la roue, une déformation de l'essieu supportant la roue, un désalignement des axes du rotor et du stator... On peut donc constater dans ce premier type de montage une usure rapide des chants du cavalier.

Un second type de cavaliers apporte une solution partiellement satisfaisante à ce problème. Il s'agit de pièces métalliques embouties coiffant un coin de crête au niveau de chaque face de cran, qui recouvrent donc la face d'entraînement du disque de rotor. Cette pièce est également rivée sur le disque et sa mise en place ne présente pas de difficultés particulières. En revanche cette solution multiplie le nombre de pièces mises en oeuvre et complique donc la fabrication.

Le but de l'invention est de proposer un disque de rotor de frein en carbone équipé d'une pluralité de cavaliers de renforcement en une seule pièce, s'emboîtant sur la partie périphérique située entre deux crans consécutifs, recouvrant en outre les faces d'entraînement des crans et dont la mise en place par des moyens classiques est aisée.

En vue de la réalisation de ce but, l'invention a pour objet un disque de rotor de frein en carbone pour la transmission à une roue d'un couple de freinage comprenant régulièrement répartis sur sa périphérie n crans d'entraînement ménagés en creux pour recevoir des clavettes de liaison en rotation du rotor à la roue, les crans ayant une forme sensiblement trapézoïdale, chacun d'eux présentant deux faces d'entraînement symétriques par rapport au plan médian du cran, contenant l'axe de rotation du disque ainsi que des cavaliers de renforcement s'emboîtant sur les parties périphériques du disque situé entre les crans. Selon la caractéristique de l'invention, les faces d'entraînement de chaque cran forment avec le plan médian du cran correspondant un angle $\dfrac{360}{2n}$ degrés et les cavaliers comportent au moins deux parois d'emboîtement d'extrémité parallèles.

On obtient grâce à cette configuration des crans sur le disque un parallélisme entre les deux faces successives de deux crans consécutifs qui limitent circonférentiellement la partie du disque formant crête entre chaque cran. Ces faces parallèles forment alors des surfaces de références précises dont l'écartement est simple à mesurer, contrôler et donc à reproduire et à partir desquelles les trous de rivets peuvent être précisément mis en position. La seule imprécision qui puisse encore exister dans la position de ces orifices est relative à la distance les séparant du sommet de la crête ou du fond du cavalier, mais le parallélisme des faces d'extrémité permet d'accepter une grande tolérance en ce qui concerne cette distance ;

D'autres caractéristiques et avantages de l'invention apparaîtront à la lecture de la description qui suit, d'un mode de réalisation non limitatif en liaison avec les dessins ci-joints, parmi lesquels :
- la figure 1 est une vue partielle d'un disque de rotor de frein en carbone équipé de cavaliers de renforcement, un cavalier ayant été retiré ;
- la figure 2 est une vue de face d'un cavalier de renforcement selon la figure 1 ;
- la figure 3 est une vue de dessous d'un cavalier de renforcement selon la figure 2 ;
- la figure 4 est une vue en coupe d'un cavalier de renforcement selon la ligne II-II de la figure 2.

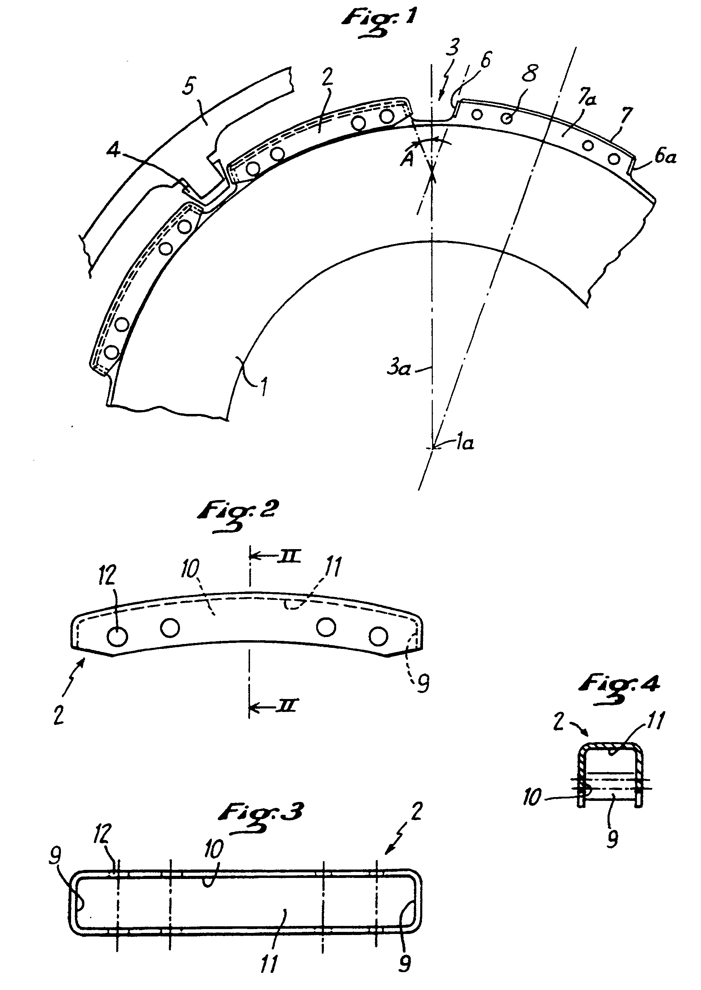

En se référant tout d'abord à la figure 1 on voit un disque de rotor de frein en carbone 1 équipé de cavaliers de renforcement 2 utilisé notamment sur les freins d'aéronef. Le disque de rotor 1 de forme annulaire est pourvu à sa périphérie extérieure d'une pluralité de crans d'entraînement 3 dans lesquels viennent se glisser des clavettes d'entraînement 4 solidaires de la roue 5. Ainsi la roue 5 et chacun des disques 1 sont solidaires en rotation et, en agissant sur les disques 1 par compression axiale au moyen de disques de stator, on crée un couple de freinage qui est transmis à la roue 5.

Les crans d'entraînement 3 ont une forme générale trapézoïdale et présentent chacun deux faces d'entraînement 6 disposées en regard l'une de l'autre et de façon symétrique par rapport au plan médian 3a du cran considéré qui contient l'axe 1a de rotation du disque 1. Les faces d'entraînement 6 s'étendent dans un plan perpendiculaire au plan du rotor 1. Selon l'invention, les faces d'entraînement 6 de chaque cran 3 forment avec le plan médian 3a du cran un angle A égal à $\frac{360}{2n}$ degrés où n est le nombre total de crans 3 à la périphérie du disque 1. Ainsi, comme il apparait clairement sur la partie droite de la figure 1, (le cavalier de renforcement 2 étant retiré), les deux faces d'entraînement successives 6, 6a de deux crans consécutifs, sont parallèles.

On voit également sur la figure 1 (partie droite) une partie en saillie 7 ou crête du disque 1 située entre deux crans consécutifs. Ces crêtes 7 comportent une pluralité de trous transversaux 8 pour la fixation par rivetage des cavaliers de renforcement 2. Comme cela ressort de la figure 1, les crêtes 7 sont coiffées par des cavaliers de renforcement 2 qui recouvrent totalement ces dernières et de ce fait protègent efficacement les faces d'entraînement 6, 6a du disque 1.

Le cavalier de renforcement 2 équipant le disque 1 représenté aux figures 2 à 4, a une forme générale de caisson allongé et comprend 4 parois d'emboîtement 9, 10 parallèles deux à deux par lesquelles il s'ajuste sur le disque 1 et un fond 11 de forme légèrement cintrée afin de s'adapter au sommet des crêtes 7. Les cavaliers de renforcement comprennent également une série de trous 12 ménagés dans les parois 10 pour le passage d'organes de fixation tels que des rivets. Le parallélisme des parois 9 d'extrémité du cavalier autorise un emboutissage dans une matrice sans fond. Ainsi le métal constituant les parois du cavalier est filé entre poinçon et matrice, opération qui permet l'obtention de cotes précises. Le cavalier peut donc parfaitement coiffer la crête 7 du disque 1 avec un bon ajustement le long des faces des crans.

## Revendications

1. Disque de rotor de frein en carbone (1) pour la transmission à une roue (5) du couple de freinage comprenant n crans (3) d'entraînement régulièrement répartis et ménagés en creux sur sa périphérie pour recevoir des clavettes (4) de liaison en rotation du rotor à la roue (5), les crans (3) ayant une forme sensiblement trapézoïdale, chacun d'eux présentant au moins deux faces d'entraînement (6) symétriques par rapport au plan médian (3a) du cran contenant l'axe de rotation du disque (1), ainsi que des cavaliers (2) de renforcement emboîtant les parties périphériques (7) du disque (1) situées entre les crans (3), caractérisé en ce que les faces d'entraînement (6) de chaque cran (3) forment avec le plan médian du cran correspondant un angle de $\frac{360}{2n}$ degrés, et en ce que chaque cavalier (2) comporte deux parois d'emboîtement d'extrémités parallèles (9).

## Ansprüche

1. Kohlenstoff-Bremsrotorscheibe (1) für die Übertragung eines Bremsmoments auf ein Rad (5), umfassend n Mitnehmer-Ausschnitte (3), die an ihrem Umfang gleichmäßig verteilt ausgespart sind, für die Aufnahme von Verbindungskeilen (4) zur drehfesten Verbindung des Rotors mit dem Rad (5), wobei die Ausschnitte (3) eine im wesentlichen trapezförmige Gestalt haben und jeder Ausschnitt (3) mindestens zwei Mitnahmeflächen (6) hat, die symmetrisch bezüglich einer die Rotationsachse der Scheibe (1) enthaltende Mittelebene (3a) des Ausschnitts sind, sowie Verstärkungskappen, die über zwischen den Ausschnitten (3) angeordnete Umfangsteile (7) der Scheibe (1) greifen, dadurch gekennzeichnet, daß die Mitnahmeflächen (6) eines jeden Ausschnitts (3) mit der Mittelebene des entsprechenden Ausschnitts einen Winkel von 360/2n Grad bilden, und daß jede Kappe (2) zwei parallele übergreifende Endwände (9) hat.

## Claims

1. A carbon disk brake rotor (1) for transmitting a braking couple to a wheel (5), the rotor including n regularly distributed drive notches (3) hollowed out of its periphery in order to receive keys (4) for providing rotary connection between the rotor and the wheel (5), each notch (3) being substantially trapezium-shaped and having at least two drive faces (6) disposed symmetrically about the midplane (3a) of the notch and containing the axis of rotation of the disk (1), the rotor also having reinforcing riders (2) fitted over the peripheral portions (7) of the disk (1) situated between the notches (3), the rotor being characterized in that the drive faces (6) of each notch (3) form an angle of (360/2n) degrees with the midplane of the corresponding notch, and in that each rider (2) includes two parallel fitted end walls (9).

Fig. 1

Fig. 2

Fig. 3

Fig. 4